# EUROPEAN PATENT SPECIFICATION

(11) **EP 3 310 034 B1**
(45) Date of publication and mention of the grant of the patent: **03.02.2021**
(21) Application number: 17000670.4
(22) Date of filing: 20.04.2017
(51) Int. Cl.: H04N 5/232

(54) **MOBILE TERMINAL**
MOBILES ENDGERÄT
TERMINAL MOBILE

(30) Priority: 12.10.2016 KR 20160132407
(43) Date of publication of application: 18.04.2018
(73) Proprietor: LG Electronics Inc., Yeongdeungpo-Gu Seoul 07336 (KR)
(72) Inventor: KIM, Seongeun, 06772 Seoul (KR); JANG, Yujune, 06772 Seoul (KR); JEON, Bongjeong, 06772 Seoul (KR); SEOL, Jie, 06772 Seoul (KR)
(74) Representative: Beyer, Andreas

(56) References cited:
- EP-A1- 2 922 049
- US-A1- 2014 176 542

## Description

### BACKGROUND

The present disclosure relates to a mobile terminal, and more particularly, to a mobile terminal capable of designating a photographing region of an omnidirectional background and photographing the designated photographing region, and an operating method of the mobile terminal.

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

As such functions become more diversified, the mobile terminal can support more complicated functions such as capturing images or video, reproducing music or video files, playing games, receiving broadcast signals, and the like. By comprehensively and collectively implementing such functions, the mobile terminal may be embodied in the form of a multimedia player or device.

Recently, the mobile terminal has been used while interworking with a capturing device that captures an omnidirectional image. A general camera may capture a two-dimensional (2D) image, but a 360-degree camera may acquire an omnidirectional spherical image having a spherical shape by photographing a three-dimensional (3D) space. The acquired omnidirectional spherical image may be transmitted to the mobile terminal and displayed on a display.

In an existing 360-degree camera, an omnidirectional background may be photographed without moving a device, but there is no way to designate a region to be photographed. That is, since there is no way to set a view angle of the existing 360-degree camera, there is inconvenience in that it is impossible for a user to photograph only a desired region.

EP 2 922 049 A1 discloses a head-mounted display configured to display a first-person viewpoint image captured by a whole-sky camera mounted on a radio-controlled model. When the image is displayed, a CPU moves the display field so as to offset the motion of the head of a user detected by a posture/location detecting unit. In this manner, an image that follows the motion of the head of the user is displayed.

US 2014/0176542 A1 discloses an image viewer configured to display an image obtained by an omnidirectional imaging device. The display range of the image can be changed following user commands received via a GUI provided on the image viewer.

### SUMMARY

Accordingly, an object of the present disclosure is to address the above-noted and other problems.

Embodiments provide a mobile terminal capable of setting a photographing region of an omnidirectional capturing device and storing only a portion to be photographed, and an operating method thereof.

Embodiments also provide a mobile terminal capable of setting at least one photographing region of an omnidirectional capturing device.

The invention is defined by a mobile terminal as recited in appended claim 1. Preferred embodiments are defined in the appended dependent claims.

According to various embodiments of the present disclosure, a user may easily and intuitively set a photographing region or a view angle of an omnidirectional capturing device though a mobile terminal interworking with the omnidirectional capturing device.

According to various embodiments of the present disclosure, the user may change a photographing region of the omnidirectional capturing device or may easily add a photographing region.

According to various embodiments of the present disclosure, the mobile terminal may store only a designated photographing region without storing a whole of an omnidirectional image received from the omnidirectional capturing device. Therefore, a storage space of a memory may be saved.

Further scope of applicability of the present disclosure will become apparent from the detailed description given hereinafter. However, it should be understood that the detailed description and specific examples, while indicating preferred embodiments of the invention, are given by illustration only, since various changes and modifications within the scope of the appended claims will become apparent to those skilled in the art from this detailed description.

### BRIEF DESCRIPTION OF THE DRAWINGS

FIG. 1A is a block diagram of a mobile terminal in accordance with the present disclosure.
FIGS. 1B and 1C are conceptual views of one example of the mobile terminal, viewed from different directions;
FIG. 2 is a diagram illustrating a configuration of a mobile terminal and an omnidirectional capturing device according to an embodiment of the present disclosure.
FIG. 3 is a diagram illustrating that an omnidirectional background around an omnidirectional capturing device is photographable.
FIG. 4 is a ladder diagram illustrating an operating method of a mobile terminal and an omnidirectional capturing device, according to an embodiment of the present disclosure.
FIGS. 5A and 5B are diagrams illustrating an example of setting a photographing region of an omnidirectional background and displaying information on the set photographing region, according to an embodiment of the present disclosure.
FIGS. 6A to 7B are diagrams illustrating a comparison between a case where a photographing region is set in an omnidirectional background and a case where the photographing region is not set in the omnidirectional background.
FIGS. 8A and 8B are diagrams illustrating an example of setting a plurality of photographing regions and displaying information on the plurality of the set photographing regions, according to an embodiment of the present disclosure.
FIGS. 9A and 9B are diagrams illustrating an example of setting a plurality of photographing regions and displaying information on the plurality of the set photographing regions, according to another embodiment of the present disclosure.
FIGS. 10A and 10B are diagrams illustrating a process of combining photographing regions if a preset photographing region and a photographing region to be additionally set overlap each other, according to an embodiment of the present
FIG. 11 is a diagram illustrating an example of designating a photographing region with respect to a position of a mobile terminal, according to an embodiment of the present disclosure.
FIGS. 12A and 12B are diagrams illustrating a process of setting a region not to be photographed in an omnidirectional background, according to an embodiment of the present disclosure.
FIGS. 13A and 13B are diagrams illustrating that a photographing speed of an omnidirectional capturing device is adjustable based on a movement speed of a mobile terminal, according to an embodiment of the present disclosure.
FIGS. 14A to 14C are diagrams illustrating an example of changing a photographing region of an omnidirectional capturing device based on an omnidirectional image displayed on a mobile terminal.
FIGS. 15A and 15B are diagrams illustrating an example of controlling an image corresponding to a photographing region or deleting a portion of photographing regions through a mobile terminal while an omnidirectional capturing device photographs an omnidirectional background through a plurality of photographing regions.
FIGS. 16 and 17 are diagrams an example of notifying that a photographing region deviates from a photographable range in a process of setting the photographing region, according to an embodiment of the present disclosure.
FIGS. 18A and 18B are diagrams illustrating a process of changing a photographing region of an omnidirectional capturing device, according to another embodiment of the present disclosure.

### DETAILED DESCRIPTION OF THE EMBODIMENTS

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings.

It will be understood that although the terms first, second, etc. may be used herein to describe various elements, these elements should not be limited by these terms. These terms are generally only used to distinguish one element from another.

It will be understood that if an element is referred to as being "connected with" another element, the element can be connected with the other element or intervening elements may also be present. In contrast, if an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

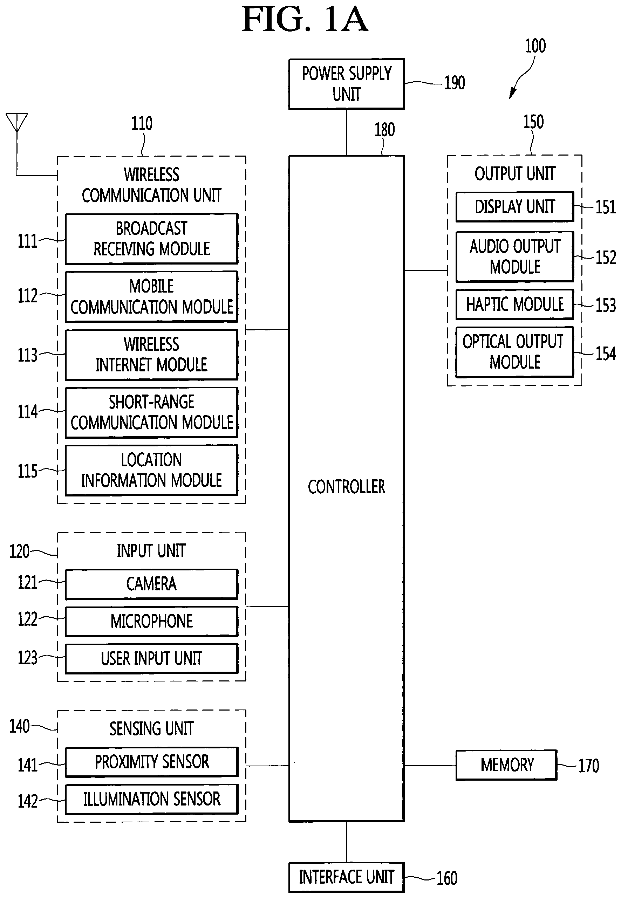

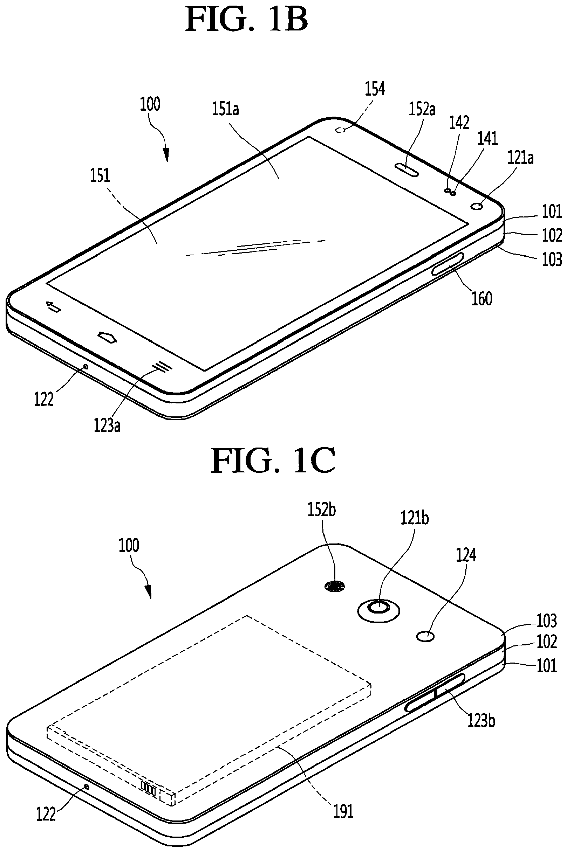

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in FIG. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be a server which generates and transmits a broadcast signal and/or broadcast associated information, or a server which receives a pre-generated broadcast signal and/or broadcast associated information, and sends such items to the mobile terminal.

The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, if the wireless Internet access is implemented according to, for example, WiBro, HSDPA, HSUPA, GSM, CDMA, WCDMA, LTE, LTE-A and the like, as part of a mobile communication network, the wireless Internet module 113 performs such wireless Internet access. As such, the wireless Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, if the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, if a call is received in the mobile terminal 100, the user may answer the call using the wearable device. Also, if a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, if the mobile terminal uses a GPS module, a position of the mobile terminal may be acquired using a signal sent from a GPS satellite. As another example, if the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 100. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sensing unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. If the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

If a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores a variety of information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

If the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications if a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provides internal power and supplies the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, if the rear cover 103 is detached from the rear case 102, the electronic components mounted to the rear case 102 are externally exposed.

As illustrated, if the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space if those cases are coupled.

The mobile terminal includes a display unit 151, first and second audio output modules 152a/152b, a proximity sensor 141, an illumination sensor 142, an optical output module 154, first and second cameras 121a/121b, first and second manipulation units 123a/123b, a microphone 122, interface unit 160 and the like.

It will be described for the mobile terminal as shown in FIGS. 1B and 1C. The display unit 151, the first audio output module 152a, the proximity sensor 141, an illumination sensor 142, the optical output module 154, the first camera 121a and the first manipulation unit 123a are arranged in front surface of the terminal body, the second manipulation unit 123b, the microphone 122 and interface unit 160 are arranged in side surface of the terminal body, and the second audio output modules 152b and the second camera 121b are arranged in rear surface of the terminal body.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3D display, an e-ink display, and combinations thereof.

The display unit 151 may be implemented using two display devices, which can implement the same or different display technology. For instance, a plurality of display units 151 may be arranged on one side, either spaced apart from each other, or these devices may be integrated, or these devices may be arranged on different surfaces.

The display unit 151 may also include a touch sensor which senses a touch input received at the display unit. If a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. If a user has checked a generated event, the controller can control the optical output module 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger if the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera 121a. If desired, second camera 121b may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." If the second camera 121b is implemented as an array camera, images may be captured in various manners using the plurality of lenses and images with better qualities.

As shown in FIG. 1C, a flash 124 is shown adjacent to the second camera 121b. If an image of a subject is captured with the second camera 121b, the flash 124 may illuminate the subject.

As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. If the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

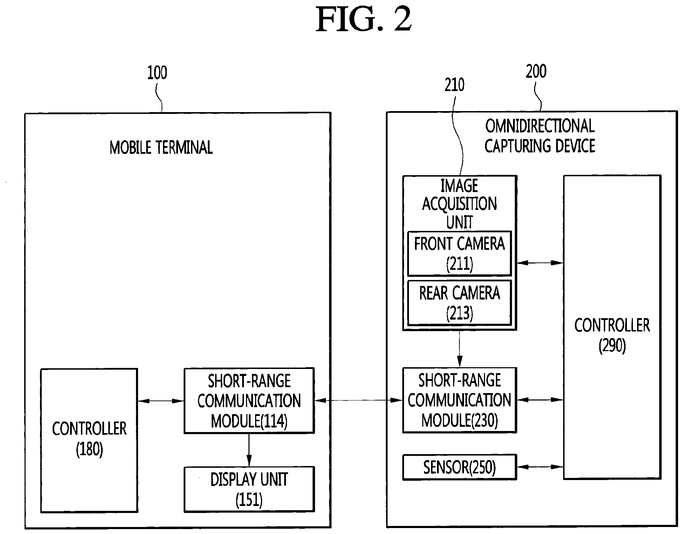

FIG. 2 is a diagram illustrating a configuration of a mobile terminal 100 and an omnidirectional capturing device 200 according to an embodiment of the present disclosure.

Only a portion of elements in the mobile terminal 100 shown in FIG. 1 is illustrated in FIG. 2. The descriptions of the configuration in the mobile terminal 100 shown in FIG. 2 are replaced by the descriptions of FIG. 1.

The omnidirectional capturing device 200 may include an image acquisition unit 210, a short-range communication module 230, a sensor 250, and a controller 290.

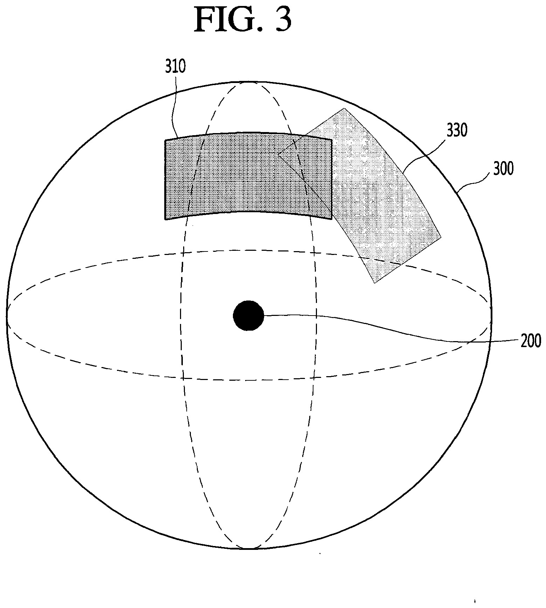

The image acquisition unit 210 may acquire an omnidirectional image by photographing an omnidirectional background around the omnidirectional capturing device 200. The omnidirectional image may have a spherical shape of FIG. 3 described later. The omnidirectional image may be called a 360-degree image.

The image acquisition unit 210 may include a plurality of cameras. A front camera 211 and a rear camera 213 are illustrated in an example in FIG. 2, but the present disclosure is not limited thereto. Three or more cameras may be provided in the omnidirectional capturing device 200.

The front camera 211 and the rear camera 213 may each include a fisheye lens having a view angle of 180° or more. The front camera 211 and the rear camera 213 may each photograph the omnidirectional background through the fisheye lens.

The controller 290 may produce an omnidirectional image by mixing two omnidirectional partial images respectively acquired through the fisheye lenses in a spherical shape.

The short-range communication module 230 may wirelessly transmit the omnidirectional image produced by the controller 290 to the mobile terminal 100, the omnidirectional image having the spherical shape. The short-range communication module 230 may transmit the omnidirectional image to the mobile terminal 100 by using any one communication specification of Wi-Fi Direct, Bluetooth, and Wi-Fi, but the communication specification is a mere example.

The omnidirectional capturing device 200 may include a wired communication interface such as a USB interface in addition to the short-range communication module 230 and perform communication with the mobile terminal 100 through the wired communication interface.

The sensor 250 may include at least one of a gyro sensor and an acceleration sensor.

The controller 290 may control an overall operation of the omnidirectional capturing device 200.

In addition, the omnidirectional capturing device 200 may include at least one microphone.

FIG. 3 is a diagram illustrating that an omnidirectional background around the omnidirectional capturing device 200 is photographable.

The omnidirectional capturing device 200 may photograph an omnidirectional background. The omnidirectional capturing device 200 may photograph a vertical lower region and a vertical upper region with respect to a horizontal plane on which the omnidirectional capturing device 200 is placed. That is, the omnidirectional capturing device 200 may acquire an omnidirectional image 300 having a spherical shape and corresponding to the omnidirectional background with respect to the omnidirectional capturing device 200. The acquired omnidirectional image 300 may be transmitted to the mobile terminal 100.

A display unit 151 of the mobile terminal 100 may display a partial image corresponding to a specific region of the omnidirectional image 300. For example, the display unit 151 of the mobile terminal 100 may display a first partial image 310 corresponding to a first region of the omnidirectional image 300 or a second partial image 330 corresponding to a second region thereof.

The partial image displayed by the display unit 151 may be changed according to setting of a user and set as a default.

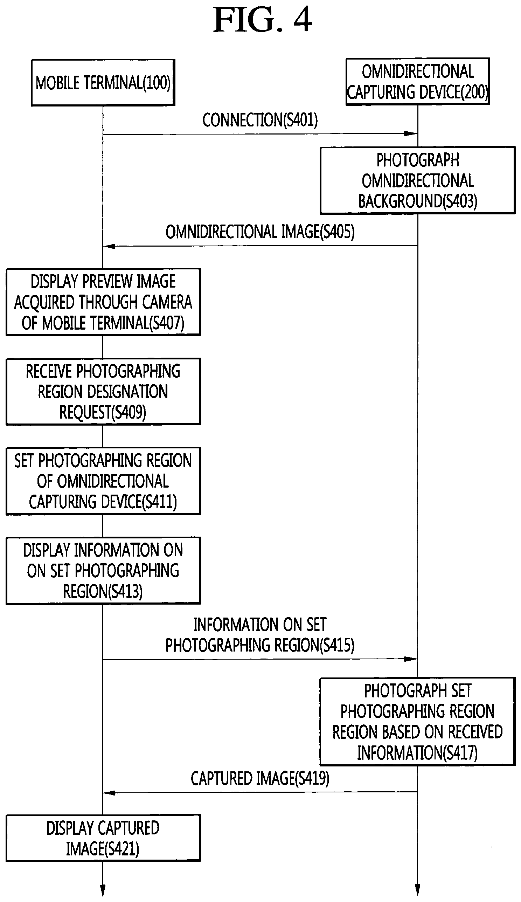

FIG. 4 is a ladder diagram illustrating an operating method of the mobile terminal 100 and the omnidirectional capturing device 200, according to an embodiment of the present disclosure.

First, the mobile terminal 100 and the omnidirectional capturing device 200 are connected to each other through short-range wireless communication (S401).

The omnidirectional capturing device 200 photographs an omnidirectional background through the image acquisition unit 210 (S403) and transmits an omnidirectional image acquired by photographing the omnidirectional background to the mobile terminal 100 (S405).

In an embodiment, the controller 290 of the omnidirectional capturing device 200 may transmit the omnidirectional image to a short-range communication module 114 of the mobile terminal 100 through the short-range communication module 230.

In an embodiment, the controller 290 of the omnidirectional capturing device 200 may transmit an omnidirectional image acquired in real time to the mobile terminal 100.

Meanwhile, a controller 180 of the mobile terminal 100 displays a preview image acquired through a camera 121 provided in the mobile terminal 100 through the display unit 151 (S407).

That is, the controller 180 of the mobile terminal 100 may display the preview image captured through the camera 121 provided in the mobile terminal 100 itself instead of the omnidirectional image received from the omnidirectional capturing device 200.

The controller 180 of the mobile terminal 100 may display the preview image before or after the omnidirectional image is received from the omnidirectional capturing device 200.

The controller 180 of the mobile terminal 100 receives a photographing region designation request while displaying the preview image on the display unit 151 (S409).

In an embodiment, the photographing region designation request may be a request for designating a photographing region of an omnidirectional background, which is to be photographed with respect to a position of the omnidirectional capturing device 200 by the omnidirectional capturing device 200. Specifically, the photographing region designation request may be a request for photographing an omnidirectional background with respect to a partial image of an omnidirectional image corresponding to a specific region of the omnidirectional background.

In the present disclosure, the phrase "a photographing region of the omnidirectional capturing device 200 is set" may be interpreted to mean that a view angle of the omnidirectional capturing device 200 is set.

Specifically, the phrase "a photographing region of the omnidirectional capturing device 200 is set" may be interpreted to mean that a view angle of the front camera 211 or the rear camera 213 in the omnidirectional capturing device 200 is set.

A user may photograph a background corresponding to an omnidirectional view through the omnidirectional capturing device 200. However, if the user views an omnidirectional image through the mobile terminal 100 later, it is difficult for the user to find only a desired portion.

At this time, if the user designates a photographing region of an omnidirectional background, although the omnidirectional capturing device 200 is rotated or moved, the user may directly view a partial image of an omnidirectional image corresponding to the photographing region.

In an embodiment, the controller 180 of the mobile terminal 100 may not store images corresponding to remaining regions except for a designated photographing region of the omnidirectional image received from the omnidirectional capturing device 200, according to the photographing region designation request.

In another embodiment, the controller 180 of the mobile terminal 100 may display only a captured image corresponding to the photographing region set from the omnidirectional capturing device 200. To this end, the omnidirectional capturing device 200 may transmit only a partial image corresponding to the set photographing region of the omnidirectional image.

In an embodiment, if a touch input of touching the display unit 151 for a certain time is sensed, a movement of the mobile terminal 100 in one direction is sensed, and then, the touch input is not sensed, the controller 180 may determine that the photographing region designation request is received, the display unit 151 displaying the preview image.

The controller 180 of the mobile terminal 100 sets the photographing region of the omnidirectional capturing device 200 in response to the photographing region designation request (S411).

In an embodiment, the controller 180 may set the photographing region of the omnidirectional capturing device 200 based on the omnidirectional image received from the omnidirectional capturing device 200 and the preview image displayed by the mobile terminal 100 according to the photographing region designation request.

The controller 180 may acquire position information of the preview image so as to check where the preview image is located in the omnidirectional image. To this end, the mobile terminal 100 and the omnidirectional capturing device 200 may each include a 9-axis sensor. The 9-axis sensor may include an acceleration sensor, a gyro sensor, and a geomagnetic sensor.

First, the controller 180 of the mobile terminal 100 may acquire an image matching the preview image placed in the omnidirectional image through an image recognition method. Thereafter, the controller 180 may acquire coordinate values of the image matching the preview image in the omnidirectional image having the spherical shape based on a value measured through the acceleration sensor, a value measured through the gyro sensor, and a value measured through the geomagnetic sensor.

The controller 180 may acquire a photographing region in an omnidirectional region by using the coordinate values of the image.

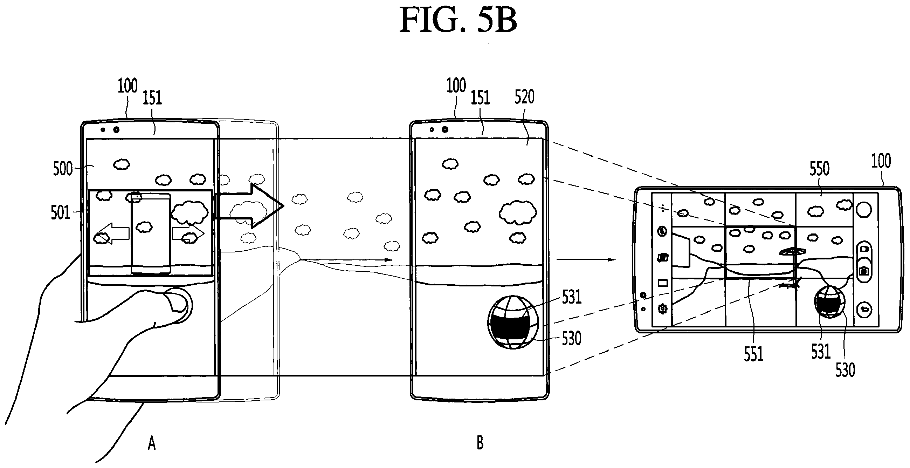

If the preview image displayed by the mobile terminal 100 is changed as shown in FIG. 5B described later, the controller 180 may search for an image in an omnidirectional image matching the changed preview image and acquire coordinate values of the found image.

The controller 180 may acquire the photographing region of the omnidirectional region by using coordinate values of an image corresponding to an initially acquired preview image and coordinate values of an image corresponding to a finally acquired preview image.

As shown in FIG. 5B described later, the initially acquired preview image may be a preview image displayed through the display unit 151 if a touch input is received and a certain time elapses, and the finally acquired preview image may be a preview image displayed through the display unit 151 if the touch input is not received.

The photographing region of the omnidirectional background may be set to a plurality of photographing regions. This will be described later.

The controller 180 displays information on the set photographing region (S413).

In an embodiment, the controller 180 of the mobile terminal 100 may display the information on the set photographing region by using an omnidirectional image received from the omnidirectional capturing device 200.

In an example, the information on the set photographing region may include information identifying a grid region of a plurality of grid regions, which corresponds to the set photographing region, the plurality of grid regions constituting a spread omnidirectional image. The spread omnidirectional image may be an image in which an omnidirectional image having a spherical shape is spread in a 2D shape.

The grid region of the plurality of grid regions corresponding to the set photographing region may be displayed so as to be differentiated from other grid regions.

The user may perform photographing with respect to a partial image corresponding to the designated photographing region through the grid region corresponding to the set photographing region.

The controller 180 of the mobile terminal 100 transmits the information on the set photographing region to the omnidirectional capturing device 200 (S415).

The information on the photographing region may include information indicating whether to photograph any region of an omnidirectional background having a spherical shape.

The information on the photographing region may include location information of the set photographing region inside the omnidirectional background.

In an example, operation S415 may be performed after operation S411 or may be performed simultaneously with operation S411.

The controller 290 of the omnidirectional capturing device 200 photographs the set photographing region based on the received information on the photographing region (S417).

The omnidirectional capturing device 200 may include a shutter button (not shown). If the shutter button is selected, the omnidirectional capturing device 200 may acquire an omnidirectional image or an omnidirectional video by photographing the omnidirectional background.

The controller 290 of the omnidirectional capturing device 200 transmits a captured image to the mobile terminal 100 (S419) and the controller 180 of the mobile terminal 100 displays the received captured image through the display unit 151 (S421).

In an embodiment, the omnidirectional capturing device 200 may transmit an omnidirectional image corresponding to the omnidirectional background to the mobile terminal 100. In this case, a partial image corresponding to a photographing region in the omnidirectional image may be identified. The mobile terminal 100 may display the identified partial image of the received omnidirectional image on the display unit 151.

The mobile terminal 100 may store only the identified partial image of the received omnidirectional image in a memory 170. The mobile terminal 100 may store only the identified partial image of the received omnidirectional image in a memory 170 and may delete remaining images. Therefore, a storage space of the memory may be saved.

The mobile terminal 100 may display only an image corresponding to the photographing region of the omnidirectional capturing device 200 through the display unit 151. The user may view only an image corresponding to a set view angle of the omnidirectional capturing device 200.

Hereinafter, the embodiment of FIG. 4 will be described in detail.

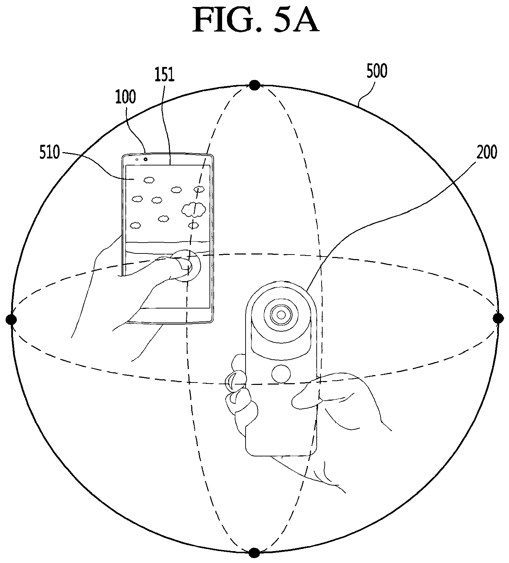

FIGS. 5A and 5B are diagrams illustrating an example of setting a photographing region of an omnidirectional background and displaying information on the set photographing region, according to an embodiment of the present disclosure.

It is assumed that the mobile terminal 100 and the omnidirectional capturing device 200 are connected to each other through short-range wireless communication in FIGS. 5A and 5B.

In addition, it is assumed that the omnidirectional capturing device 200 photographs an omnidirectional background around the omnidirectional capturing device 200.

Referring to FIG. 5A, the mobile terminal 100 displays a preview screen according to execution of a camera application installed thereon. That is, the mobile terminal 100 photographs a background through a camera (not shown) installed on a rear surface thereof. The display unit 151 of the mobile terminal 100 displays a preview image 510 corresponding to the photographed background.

In FIG. 5A, the mobile terminal 100 may receive an omnidirectional image corresponding to an omnidirectional background 500 from the omnidirectional capturing device 200, but may not display the received omnidirectional image on the display unit 151.

FIG. 5B is a diagram illustrating a process of receiving a photographing region designation request for designating a photographing region of the omnidirectional background 500.

Referring to FIG. 5B, the mobile terminal 100 may receive a touch input of touching the display unit 151 displaying the preview image for a certain time. The certain time may be three seconds, but the three seconds are a mere example.

If the mobile terminal 100 receives the touch input of touching the display unit 151 displaying the preview image for the certain time, the mobile terminal 100 may display a guide image 501 through the display unit 151, the guide image 501 indicating that the photographing region of the omnidirectional background 500 is settable. The guide image 501 is a mere example, and a text may be displayed instead of the guide image 501, the text indicating that the photographing region of the omnidirectional background 500 is settable.

While the touch input is received, the mobile terminal 100 may be moved by a certain distance, i.e., a first position A to a second position B. As the mobile terminal 100 is moved from the first position A to the second position B, the preview image 510 displayed by the mobile terminal 100 may also be changed.

While the mobile terminal 100 is moved from the first position A to the second position B, the controller 180 of the mobile terminal 100 may display a guide spherical-view 530 in which the omnidirectional background 500 is reduced. In addition, While the mobile terminal 100 is moved from the first position A to the second position B, the mobile terminal 100 may display a guide photographing region 531 on the guide spherical-view 530, the guide photographing region 531 indicating that a photographing region is designated in the omnidirectional background 500.

In an embodiment, while the mobile terminal 100 is moved, the controller 180 of the mobile terminal 100 may compare an omnidirectional image received from the omnidirectional capturing device 200 and a preview image displayed through the display unit 151 in real time. The controller 180 may display the guide photographing region 531 on the guide spherical-view 530 based on a comparison result, the guide photographing region 531 corresponding to a preview image included in an omnidirectional image.

The user may intuitively grasp the setting of the photographing region through the guide photographing region 531. That is, the user may rapidly grasp that any region of the omnidirectional background 500 is set as the photographing region to be photographed.

If a touch input is not sensed after the mobile terminal 100 is moved to the second position B, the mobile terminal 100 may set the photographing region. The set photographing region may be a region of the omnidirectional background 500, which is to be photographed with respect to a position of the omnidirectional capturing device 200 by the user.

That is, no matter how the omnidirectional capturing device 200 is placed, the mobile terminal 100 may capture only a partial image corresponding to the set photographing region and display the captured partial image on a preview screen.

If the photographing region is set, as shown in FIG. 5B, the controller 180 of the mobile terminal 100 may change the preview image 510 acquired through the camera provided in the mobile terminal 100 into an omnidirectional image 550 received from the omnidirectional capturing device 200.

The omnidirectional image 550 may be an image corresponding to an omnidirectional background photographed by the omnidirectional capturing device 200. The omnidirectional image 550 may be an image having a 2D spread shape rather than a spherical image.

The mobile terminal 100 may receive an omnidirectional image having a spherical shape from the omnidirectional capturing device 200 and change the omnidirectional image having the spherical shape into an image having a 2D shape.

The mobile terminal 100 may divide the omnidirectional image 550 having the 2D shape into a plurality of grid regions. A grid region 551 of the plurality of grid regions corresponding to the set photographing region may be displayed so as to be differentiated from other grid regions. For example, the grid region 551 corresponding to the set photographing region may be highlighted.

In addition, the mobile terminal 100 may display the guide photographing region 531 corresponding to the differentiated grid region 551 on the guide spherical-view 530.

Accordingly, the user may easily confirm a photographing region to be photographed in an omnidirectional background.

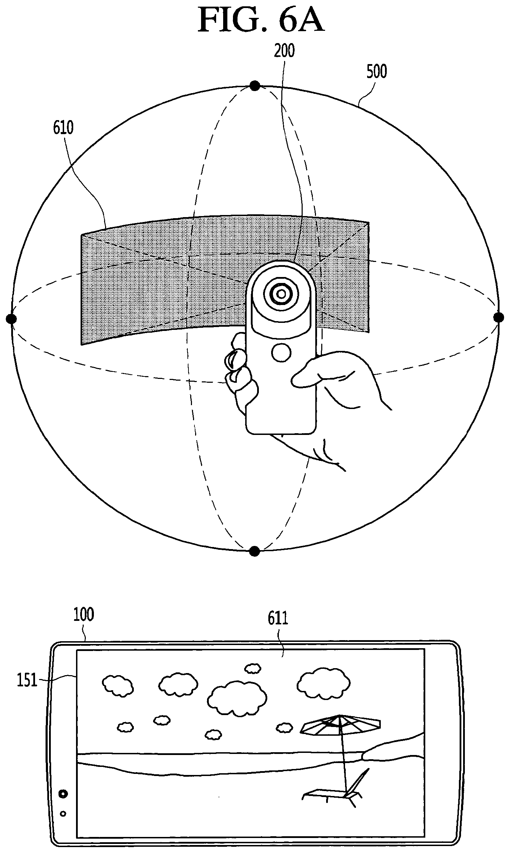

FIGS. 6A to 7B are diagrams illustrating a comparison between a case where a photographing region is set in an omnidirectional background and a case where the photographing region is not set in the omnidirectional background.

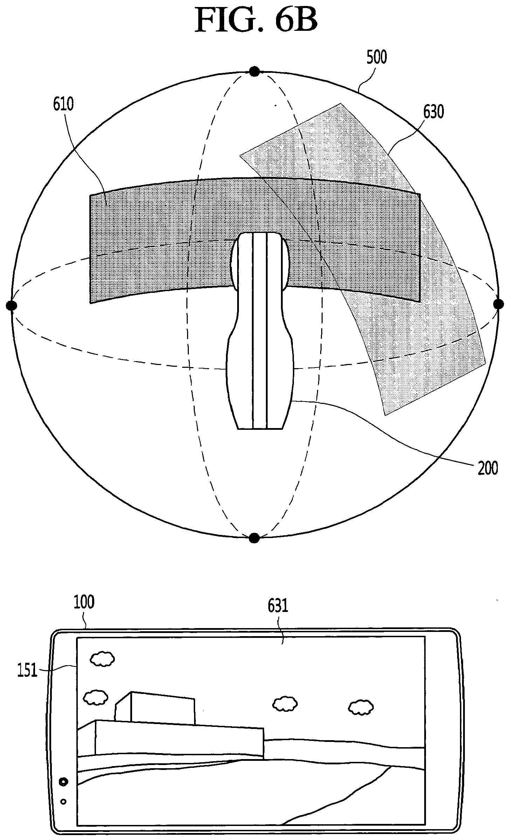

First, FIGS. 6A and 6B are diagrams illustrating an example in which a photographing region is changed according to a movement of the omnidirectional capturing device 200 in the case where the photographing region is not set in the omnidirectional background.

Referring to FIG. 6A, the omnidirectional capturing device 200 photographs an omnidirectional background 600 having a spherical shape through a front camera (not shown) and a rear camera (not shown). In particular, the omnidirectional capturing device 200 photographs the omnidirectional background 600 with respect to a first region 610 of the omnidirectional background 600.

An omnidirectional image corresponding to the photographed omnidirectional background 600 may be transmitted to the mobile terminal 100. The mobile terminal 100 may display a first partial image 611 of the received omnidirectional image on the display unit 151, the first partial image 611 corresponding to the first region 610.

If the omnidirectional capturing device 200 is rotated by a certain angle as shown in FIG. 6B, the omnidirectional capturing device 200 photographs the omnidirectional background 600 with respect to a second region 630 of the omnidirectional background 600.

At this time, the mobile terminal 100 may display a second partial image 631 of the received omnidirectional image on the display unit 151, the second partial image 631 corresponding to the second region 630. That is, as the omnidirectional capturing device 200 is rotated, an image displayed by the mobile terminal 100 may be changed. More specifically, this is because a photographing region is changed as the omnidirectional capturing device 200 is rotated.

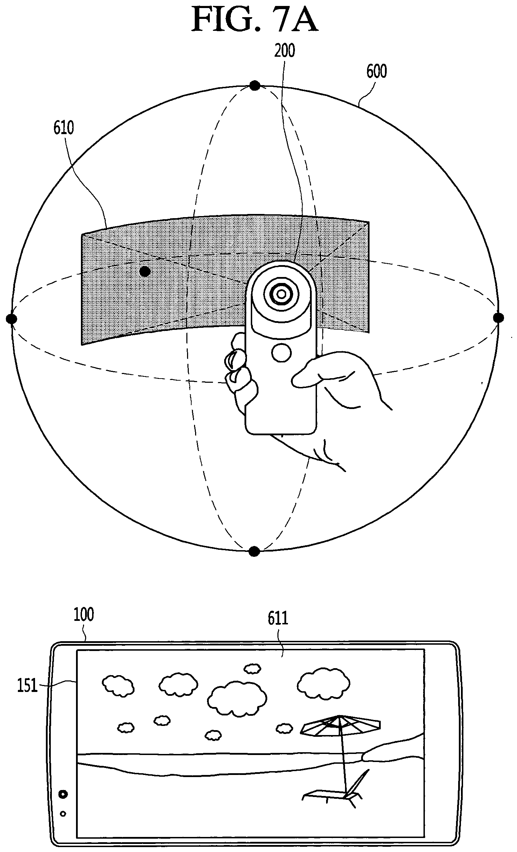

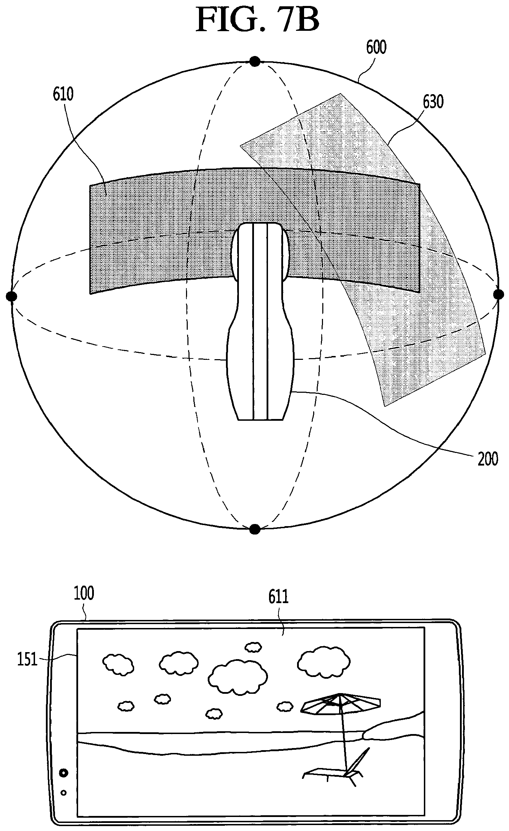

Next, FIGS. 7A and 7B will be described. FIGS. 7A and 7B are diagrams illustrating an example in which a photographing region is fixed (or maintained) according to a movement of the omnidirectional capturing device 200 in the case where the photographing region is set in the omnidirectional background.

In comparison with FIGS. 6A and 6B, FIGS. 7A and 7B are diagrams illustrating the case where the photographing region is set.

The setting of the photographing region is the same as described with reference to FIGS. 5A and 5B.

If the photographing region is set to the first region 610 of the omnidirectional background 600, although the omnidirectional capturing device 200 is rotated as shown in FIGS. 7A and 7B, the omnidirectional capturing device 200 may fix the photographing region as the first region 610. That is, although the omnidirectional capturing device 200 is rotated, an image displayed by the mobile terminal 100 may not be changed into the first partial image 611.

Accordingly, the user may photograph an omnidirectional background with respect to a region to be focused and photographed by the user.

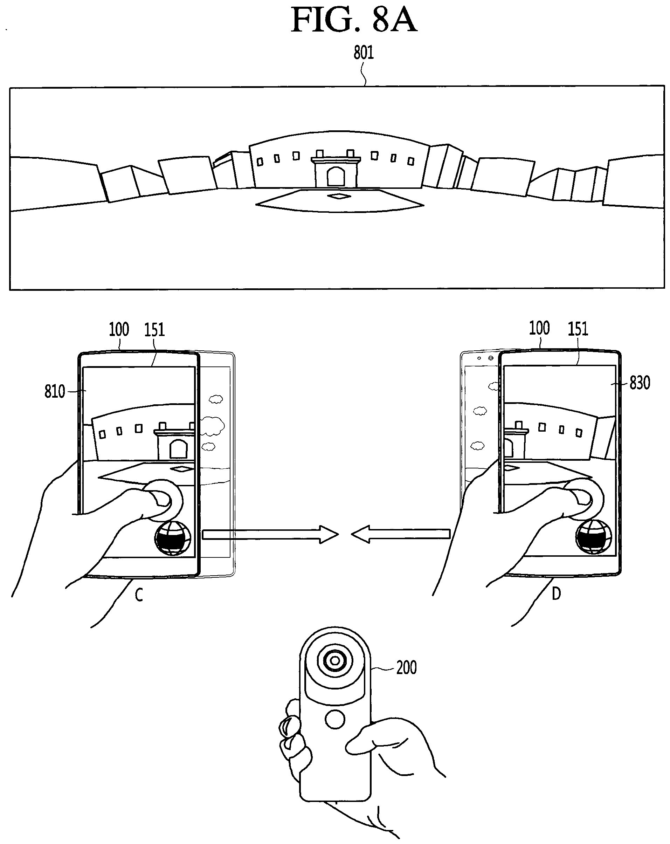

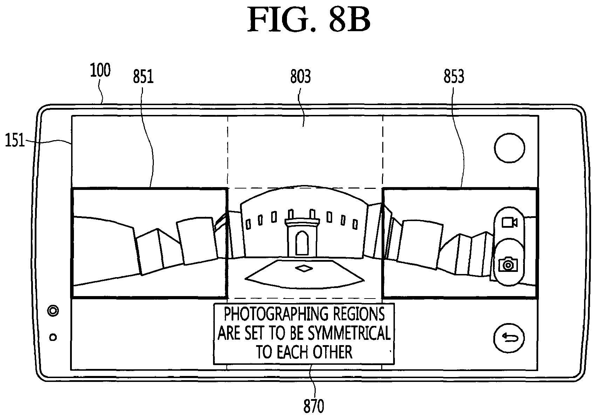

FIGS. 8A and 8B are diagrams illustrating an example of setting a plurality of photographing regions and displaying information on the plurality of the set photographing regions, according to an embodiment of the present disclosure.

It is assumed that the mobile terminal 100 and the omnidirectional capturing device 200 are connected to each other through short-range wireless communication in FIGS. 8A and 8B.

In addition, it is assumed that the omnidirectional capturing device 200 photographs an omnidirectional background 801 around the omnidirectional capturing device 200.

For convenience of description, the omnidirectional background 801 is illustrated in a 2D shape rather than a spherical shape.

The mobile terminal 100 displays a preview image 810 captured through a camera (not shown) installed therein. In this state, the mobile terminal 100 may receive a first photographing region designation request.

If a touch input is received on the display unit 151 displaying the preview image 810 for a certain time, the mobile terminal 100 is moved in one direction from a position C to a position D, and then, the touch input is not received, the controller 180 of the mobile terminal 100 may determine that the first photographing region designation request is received.

The controller 180 may set a first photographing region of the omnidirectional background 801 according to the first photographing region designation request.

After that, the mobile terminal 100 may receive a second photographing region designation request.

If a touch input is received on the display unit 151 displaying the preview image 810 for a certain time, the mobile terminal 100 is moved in a direction (opposite to the one direction) from the position D to the position C, and then, the touch input is not received, the controller 180 of the mobile terminal 100 may determine that the second photographing region designation request is received.

The controller 180 may set a second photographing region of the omnidirectional background 801 according to the second photographing region designation request.

The first photographing region and the second photographing region may be regions symmetrical to each other with respect to the omnidirectional background 801.

In an embodiment, the first photographing region may be a set photographing region of the front camera 211 in the omnidirectional capturing device 200 and the second photographing region may be a set photographing region of the rear camera 213 in the omnidirectional capturing device 200.

If a photographing region is set, the controller 180 may display information on the set photographing region on the display unit 151. As shown in FIG. 8B, the controller 180 may divide an omnidirectional image 803 corresponding to the omnidirectional background 801 into a plurality of grid regions. Among the plurality of grid regions, a first grid region 851 corresponding to the first photographing region and a second grid region 853 corresponding to the second photographing region may be displayed so as to be differentiated from other grid regions.

In addition, the controller 180 may further display a pop-up window 870 indicating that photographing regions are set to be symmetrical to each other.

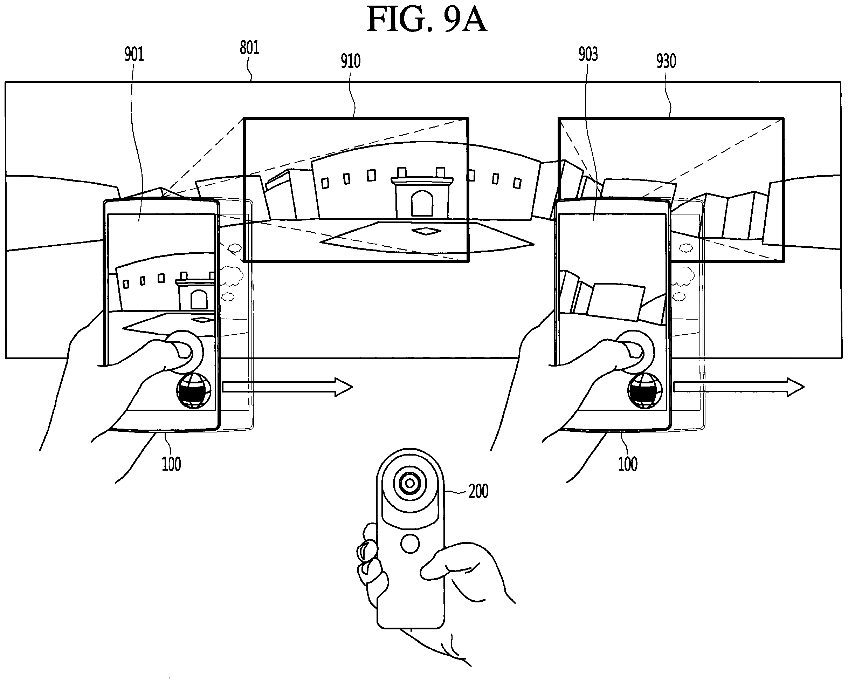

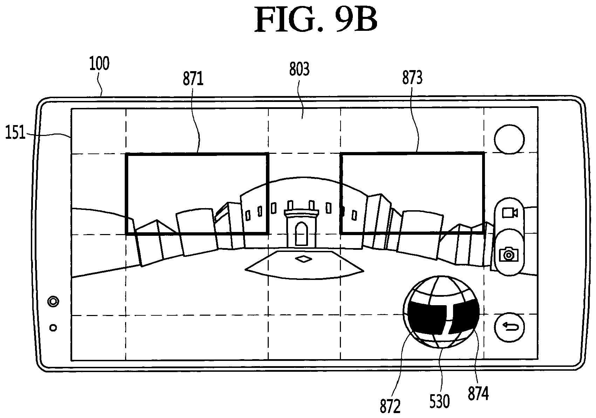

FIGS. 9A and 9B are diagrams illustrating an example of setting a plurality of photographing regions and displaying information on the plurality of the set photographing regions, according to another embodiment of the present disclosure.

In the descriptions of FIGS. 9A and 9B, the descriptions provided with reference to FIGS. 8A and 8B will be omitted.

The mobile terminal 100 displays a preview image 901 captured through a camera (not shown) installed therein. In this state, the mobile terminal 100 may receive a first photographing region designation request.

If a touch input is received on the display unit 151 displaying the preview image 901 for a certain time, the mobile terminal 100 is moved by a certain distance, and then, the touch input is not received, the controller 180 of the mobile terminal 100 may determine that the first photographing region designation request is received.

The controller 180 may set a first photographing region 910 of the omnidirectional background 801 according to the first photographing region designation request.

After that, the mobile terminal 100 may receive a second photographing region designation request.

If a touch input is received on the display unit 151 displaying the preview image 901 for a certain time, the mobile terminal 100 is moved from the position D to the position C, and then, the touch input is not received, the controller 180 of the mobile terminal 100 may determine that the second photographing region designation request is received.

The controller 180 may set a second photographing region 930 of the omnidirectional background 801 according to the second photographing region designation request.

If a photographing region is set, the controller 180 may display information on the set photographing region through the display unit 151. As shown in FIG. 9B, the controller 180 may divide an omnidirectional image 803 corresponding to the omnidirectional background 801 into a plurality of grid regions. Among the plurality of grid regions, a first grid region 871 corresponding to the first photographing region 910 and a second grid region 873 corresponding to the second photographing region 930 may be displayed so as to be differentiated from other grid regions.

In addition, the controller 180 may display a first guide photographing region 872 corresponding to the first grid region 871 and a second guide photographing region 874 corresponding to the second grid region 873 on a guide spherical-view 530.

If the omnidirectional capturing device 200 captures a video, the omnidirectional capturing device 200 may capture a video corresponding to the first photographing region 910 and a video corresponding to the second photographing region 930.

The mobile terminal 100 may receive the video corresponding to the first photographing region 910 and the video corresponding to the second photographing region 930 from the omnidirectional capturing device 200. The mobile terminal 100 may play the received video corresponding to the first photographing region 910 and the received video corresponding to the second photographing region 930 on one screen.

As described above, the user may set a plurality of photographing regions and photograph only a desired portion.

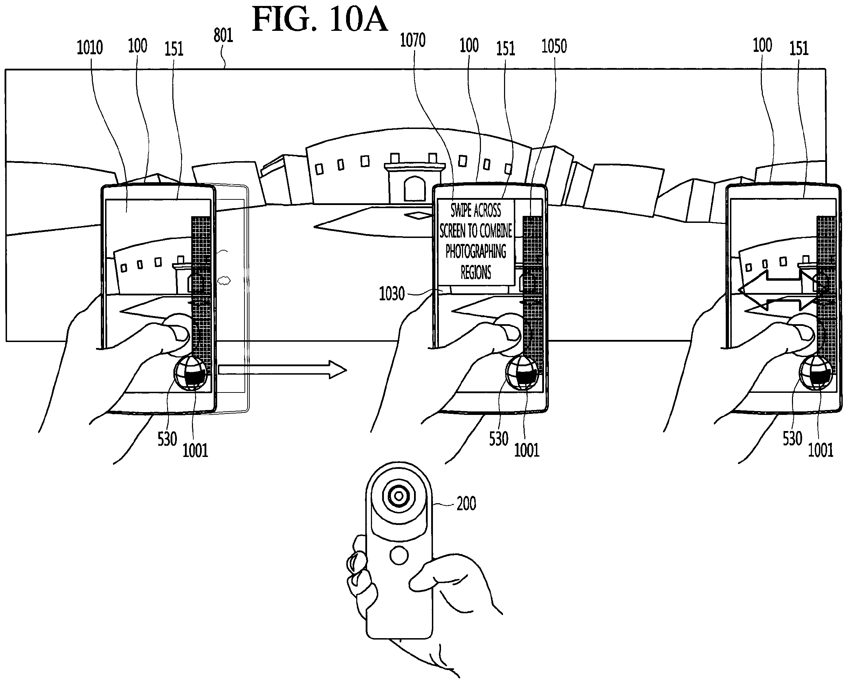

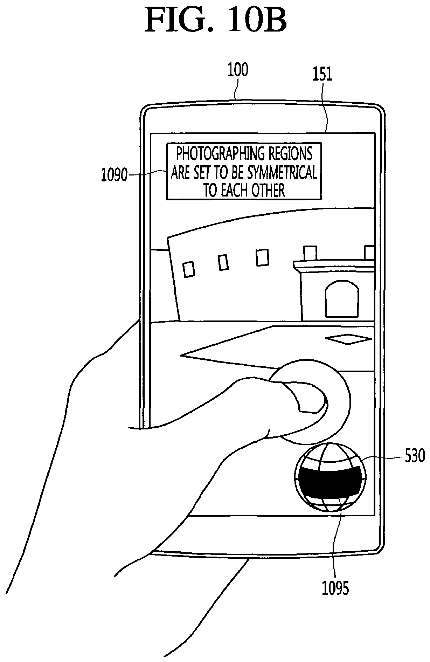

FIGS. 10A and 10B are diagrams illustrating a process of combining photographing regions if a preset photographing region and a photographing region to be additionally set overlap each other, according to an embodiment of the present disclosure.

Referring to FIG. 10A, the mobile terminal 100 displays a preview image 1010 captured through a camera provided therein on the display unit 151. The user is to designate a new photographing region.

A preset photographing region may exist. The mobile terminal 100 may display information on the preset photographing region in a guide spherical-view 530. That is, a guide photographing region 1001 corresponding to the preset photographing region is displayed on the guide spherical-view 530.

The mobile terminal 100 may receive a photographing region designation request for designating a new photographing region. In an embodiment, if a touch input is received on the display unit 151 for a certain time and a movement of the mobile terminal 100 is sensed, the controller 180 may determine that the photographing region designation request is received.

In another embodiment, if a touch input is received on the display unit 151 for a certain time, the mobile terminal 100 is moved by a certain distance, and then, the touch input is not received, the controller 180 may determine that the photographing region designation request is received.

As the touch input is received on the display unit 151 displaying the preview image 1010 for the certain time and the mobile terminal 100 is moved, the preview image 1010 may be changed.

In a process of changing the preview image 1010, if a new photographing region to be currently set and the preset photographing region overlap each other, the mobile terminal 100 may display a pop-up window 1070 indicating that the preset photographing region and the new photographing region partially overlap each other.

The pop-up window 1070 may include a text requesting a specific action for combining photographing regions. The specific action may be a command for swiping across a screen of the display unit 151.

If the command for swiping across the screen of the display unit 151 is received, the controller 180 may combine the preset photographing region and the new photographing region.

As shown in FIG. 10B, the controller 180 may display a guide photographing region 1095 indicating a combined photographing region on the guide spherical-view 530.

The user may easily combine a preset photographing region and a photographing region to be newly set.

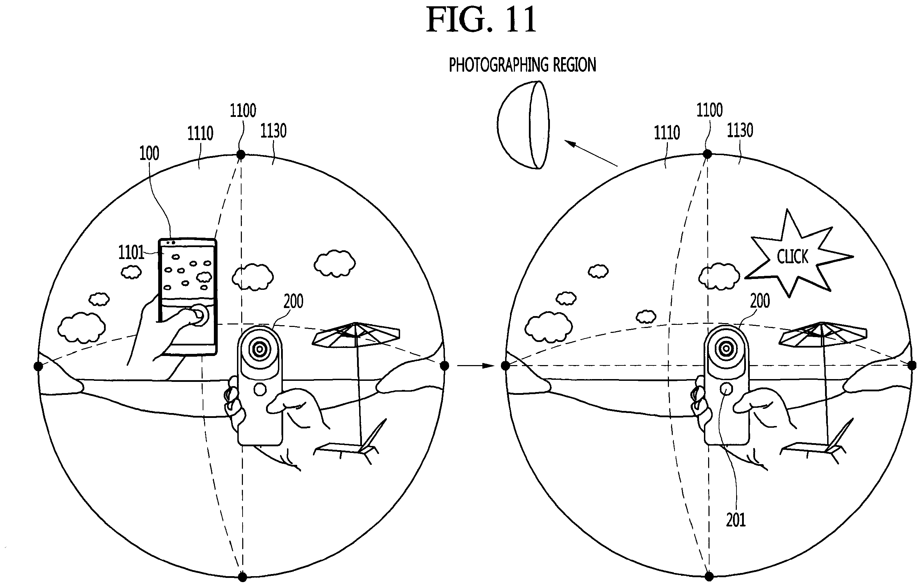

FIG. 11 is a diagram illustrating an example of designating a photographing region with respect to a position of the mobile terminal 100, according to an embodiment of the present disclosure.

Referring to FIG. 11, it is assumed that the mobile terminal 100 and the omnidirectional capturing device 200 are located in an omnidirectional background 1100 having a spherical shape. The omnidirectional background 1100 having the spherical shape may include a left hemisphere 1110 and a right hemisphere 1130.

The mobile terminal 100 displays a preview image 1101 indicating a portion of the omnidirectional background 1100. In addition, the mobile terminal 100 is located in a region formed by the left hemisphere 1110.

If a touch input of touching a screen of the display unit 151 for a certain time or more is received and an image of the mobile terminal 100 disappears from an omnidirectional image acquired through the omnidirectional capturing device 200, the omnidirectional capturing device 200 may set the region formed by the left hemisphere 1110 as a photographing region.

If a shutter button 201 provided in the omnidirectional capturing device 200 is selected, the omnidirectional capturing device 200 may photograph only the region corresponding to the left hemisphere 1110.

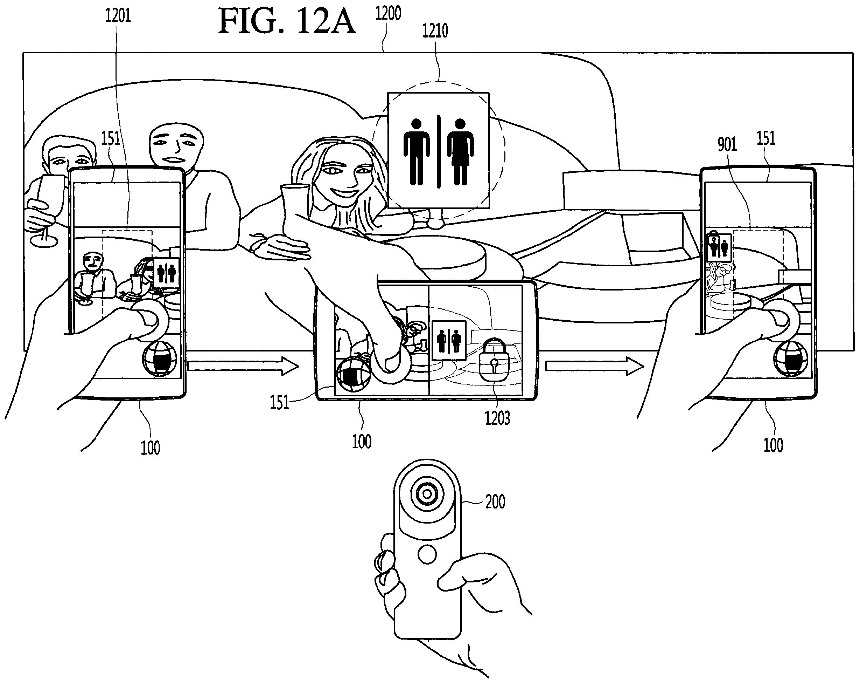

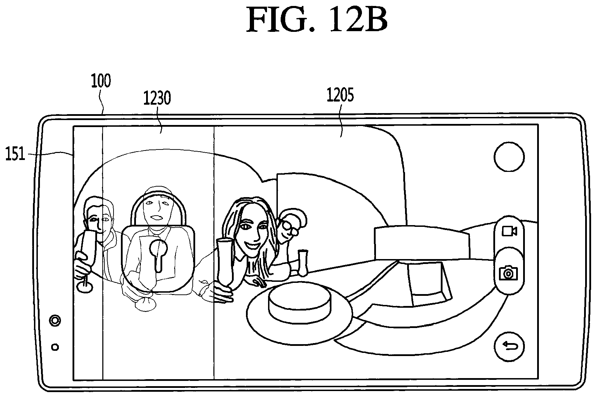

FIGS. 12A and 12B are diagrams illustrating a process of setting a region not to be photographed in an omnidirectional background, according to an embodiment of the present disclosure.

It is assumed that the mobile terminal 100 and the omnidirectional capturing device 200 are connected to each other through short-range wireless communication in FIGS. 12A and 12B.

In addition, it is assumed that the omnidirectional capturing device 200 photographs an omnidirectional background 1200 around the omnidirectional capturing device 200.

For convenience of description, the omnidirectional background 1200 is illustrated in a 2D shape rather than a spherical shape.

The mobile terminal 100 displays a preview image 1201 captured through a camera (not shown) installed therein. In this state, the mobile terminal 100 may receive a photographing region designation request.

As the photographing region designation request is received, a photographing region of the omnidirectional capturing device 200 may be designated. Meanwhile, the mobile terminal 100 may receive a photographing region non-designation request for not designating a photographing region. If a placement of the mobile terminal 100 is changed from a portrait mode to a landscape mode, the mobile terminal 100 may determine that the photographing region non-designation request is received.

For example, as shown in FIG. 12A, if a region 1210 not to be photographed is present while a photographing region is set, the placement of the mobile terminal 100 may be changed from the portrait mode to the landscape mode. Information on a change of a placement mode in the mobile terminal 100 may be transmitted to the omnidirectional capturing device 200. The omnidirectional capturing device 200 may set the region 1210 not to be photographed of the omnidirectional background 1200 according to the change of a placement mode in the mobile terminal 100.

That is, the mobile terminal 100 may not set a region corresponding to the displayed preview image 1201 as a photographing region of the omnidirectional capturing device 200 in the landscape mode.

On the other hand, the mobile terminal 100 may display a guide image 1203 indicating that a partial image displayed on the preview image 1201 is not set as the photographing region of the omnidirectional capturing device 200.

If the placement of the mobile terminal 100 is changed from the landscape mode to the portrait mode, the omnidirectional capturing device 200 may sense the change of the placement and continue to set a photographing region.

If the photographing region and the non-photographing region are set as in the process of FIG. 12A, the controller 180 of the mobile terminal 100 may display a non-photographing guide image 1230 indicating the non-photographing region through the display unit 151. That is, the controller 180 may display the non-photographing guide image 1203 at a position corresponding to the non-photographing region not to be photographed on an omnidirectional image 1205.

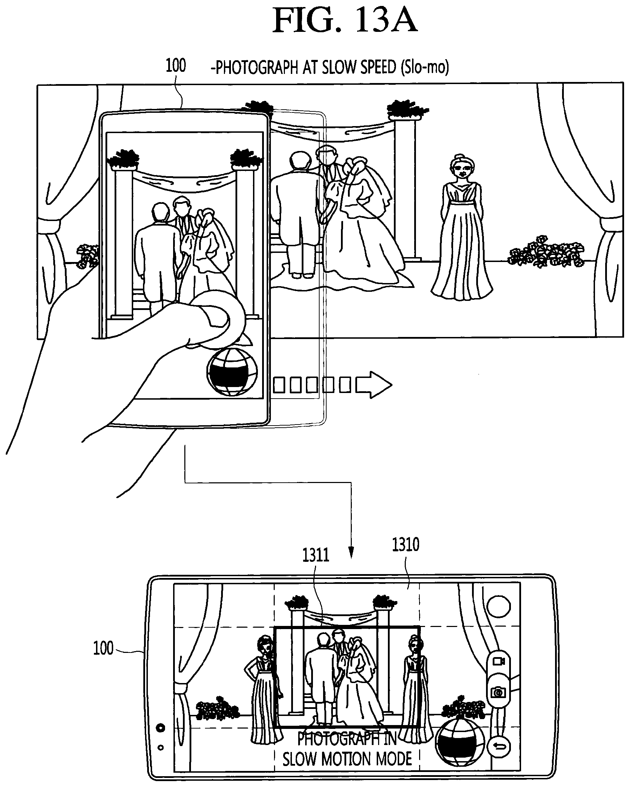

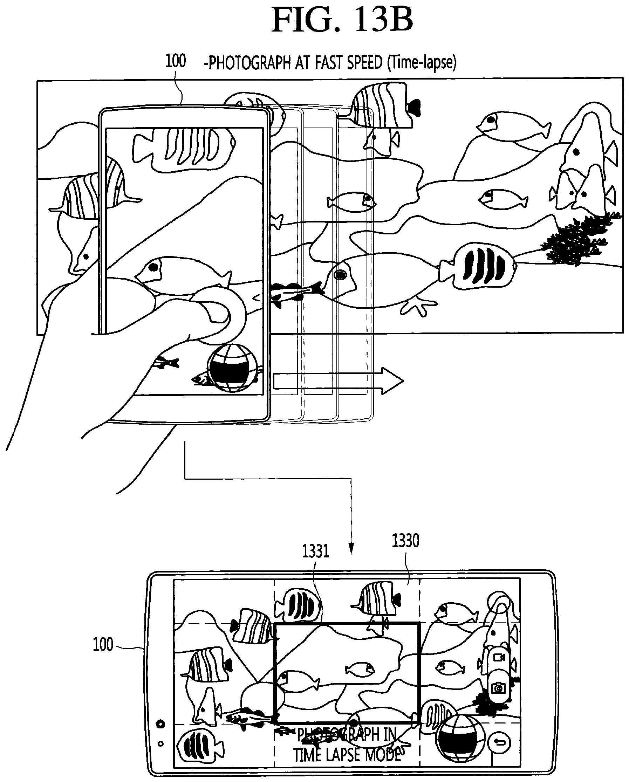

FIGS. 13A and 13B are diagrams illustrating that a photographing speed of the omnidirectional capturing device 200 is adjustable based on a movement speed of the mobile terminal 100, according to an embodiment of the present disclosure.

Hereinafter, the photographing speed of the omnidirectional capturing device 200 may indicate the number of image frames captured per second.

If the omnidirectional capturing device 200 sets a photographing region, descriptions in FIG. 13A assume that the movement speed of the mobile terminal 100 is a first speed and descriptions in FIG. 13B assume that the movement speed of the mobile terminal 100 is a second speed. The first speed may be less that the second speed.

If the mobile terminal 100 is moved at the second speed and a photographing region is set, as shown in FIG. 13A, the mobile terminal 100 may display an omnidirectional image 1310 divided into a plurality of grid regions.

In addition, a grid region 1311 of the plurality of grid regions, which is set as a photographing region, may be identified.

Furthermore, the mobile terminal 100 may further display a text indicating that the photographing region corresponding to the identified grid region 1311 is photographable in a slow motion mode. The slow motion mode may be a mode of photographing a set photographing region at a speed of 120 frames per second (fps), but the mode is a mere example.

If the mobile terminal 100 is moved at the second speed and a photographing region is set, as shown in FIG. 13B, the mobile terminal 100 may display an omnidirectional image 1330 divided into a plurality of grid regions.

In addition, a grid region 1331 of the plurality of grid regions, which is set as a photographing region, may be identified.

Furthermore, the mobile terminal 100 may further display a text indicating that the photographing region corresponding to the identified grid region 1331 is photographable in a time lapse mode. The time lapse mode may be a mode of photographing a set photographing region at a speed of 60 fps, but the mode is a mere example.

The user may set the photographing region and the photographing speed of the omnidirectional capturing device 200 at the same time while moving the mobile terminal 100.

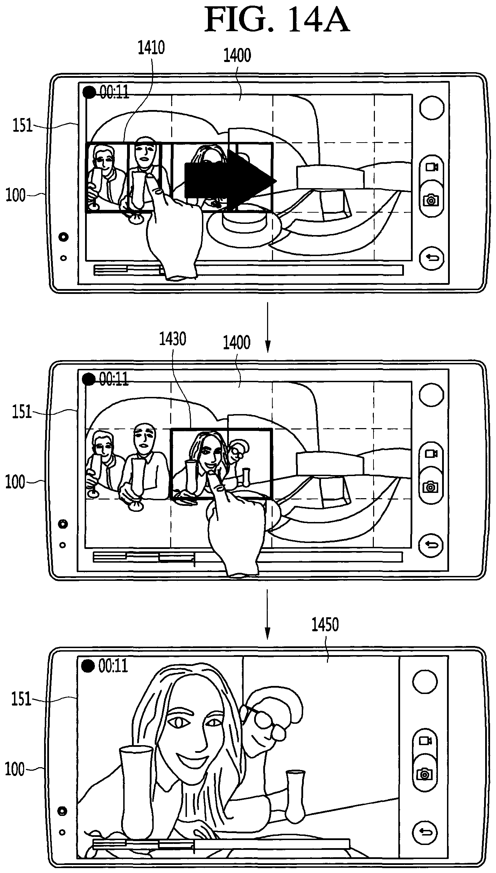

FIGS. 14A to 14C are diagrams illustrating an example of changing a photographing region of the omnidirectional capturing device 200 based on an omnidirectional image displayed on the mobile terminal 100.

Referring to FIG. 14A, the mobile terminal 100 displays an omnidirectional image 1400 received from the omnidirectional capturing device 200. The omnidirectional image 1400 may have a 2D spread shape.

The omnidirectional image 1400 may be divided into a plurality of grid regions. A first photographing region of the plurality of grid regions may be set as a photographing region of the omnidirectional capturing device 200. A drag input of dragging a guide box 1410 surrounding the first photographing region may be received. A photographing output according to the drag input may produce the same effect as slowly moving the omnidirectional capturing device 200 in a drag input direction.

The mobile terminal 100 may set a second region as a new photographing region of the omnidirectional capturing device 200 according to the received drag input, the guide box 1410 being located in the second region.

If a second photographing region 1430 is selected, the mobile terminal 100 may display an image 1450 corresponding to the second photographing region 1430 through the display unit 151.

The user may easily change the photographing region of the omnidirectional capturing device 200 only though a drag input.

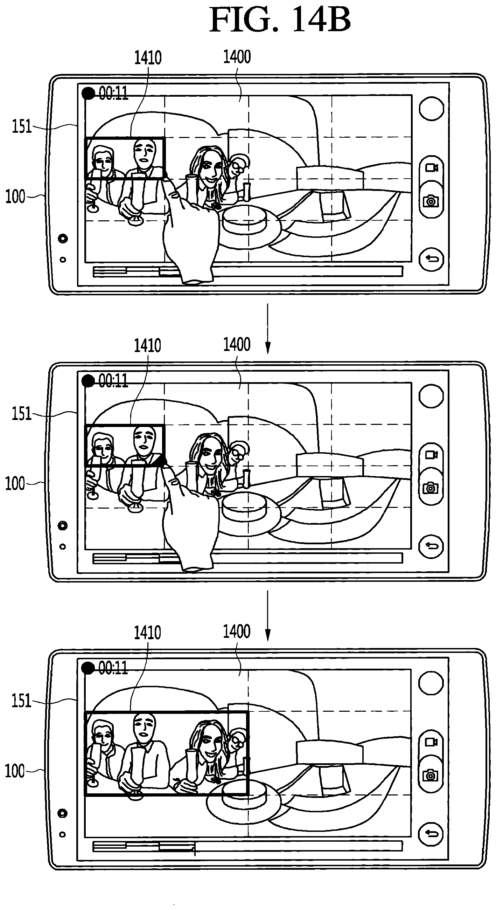

Referring to FIG. 14B, the mobile terminal 100 may receive a drag input of dragging a vertex of the guide box 1410. The mobile terminal 100 may enlarge the guide box 1410 according to the received drag input.

The mobile terminal 100 may change a size of a photographing region into a size corresponding to the enlarged guide box 1410. Therefore, it is possible to produce the same effect as zooming out a captured image corresponding to the photographing region of the omnidirectional capturing device 200.

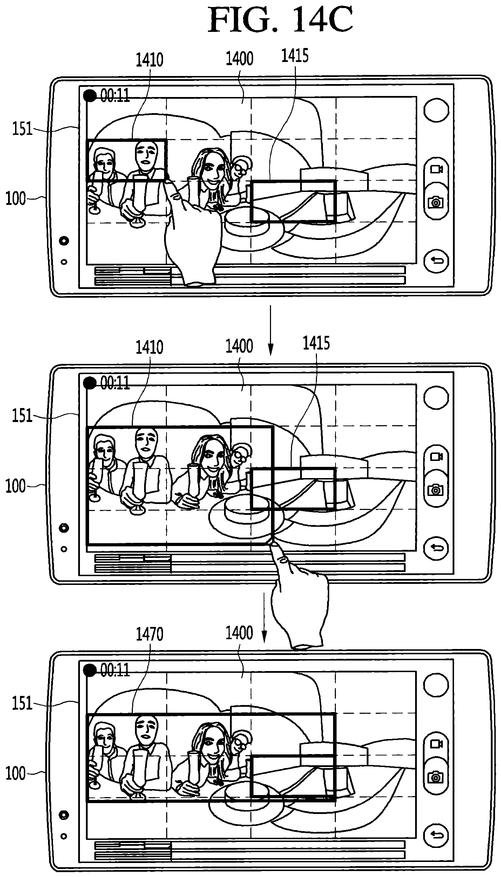

Referring to FIG. 14C, in a case where two photographing regions are set is illustrated.

The two photographing regions are respectively divided by a first guide box 1410 and a second guide box 1415.

if the first guide box 1410 corresponding to a first photographing region is enlarged so that the first photographing region overlaps a second photographing region, and an input of touching the first guide box 1410 for a certain time is received, the mobile terminal 100 may change a third photographing region including the first photographing region and the second photographing region into a photographing region of the omnidirectional capturing device 200. Therefore, a third guide box 1470 corresponding to the third photographing region may be displayed.

The omnidirectional capturing device 200 may photograph an omnidirectional background with respect to each of the second photographing region and the third photographing region.

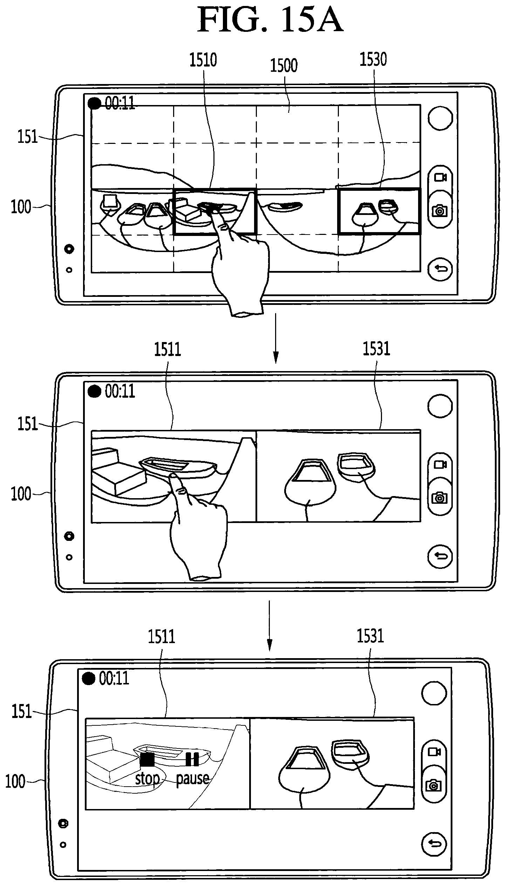

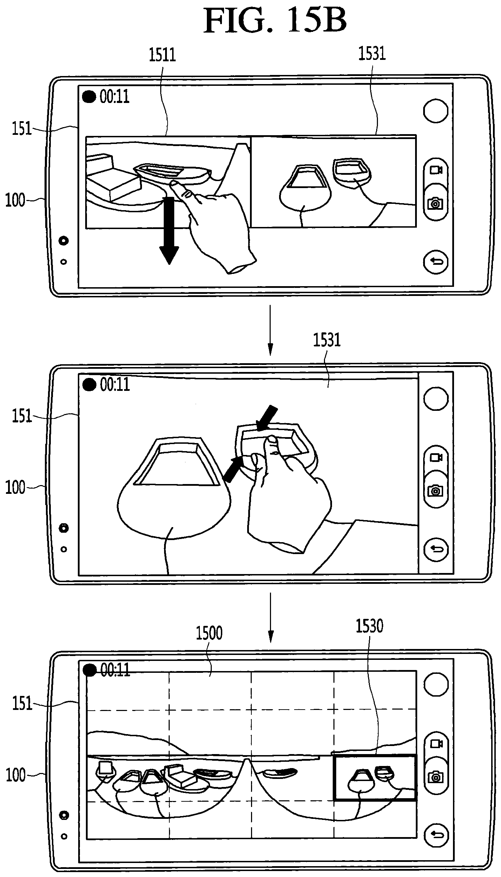

FIGS. 15A and 15B are diagrams illustrating an example of controlling an image corresponding to a photographing region or deleting a portion of photographing regions through the mobile terminal 100 while the omnidirectional capturing device 200 photographs an omnidirectional background through a plurality of photographing regions.

Referring to FIG. 15A, the mobile terminal 100 may display an omnidirectional image 1500 including a plurality of grid regions through the display region 151.

It is assumed that a first grid region 1510 and a second grid region 1530 of the plurality of grid regions may be set as a photographing region of the omnidirectional capturing device 200.

If the first grid region 1510 and the second grid region 1530 set as the photographing region are selected, the mobile terminal 100 may display a first captured image 1511 corresponding to the first grid region 1510 and a second captured image 1531 corresponding to the second grid region 1530 on a screen of the display unit 151. The first captured image 1511 and the second captured image 1531 may be displayed on divided screens, respectively.

The first captured image 1511 and the second captured image 1531 may be an image received in real time from the omnidirectional capturing device 200.

If the first captured image 1511 is selected, the mobile terminal 100 may display an end button for ending a playback of the first captured image 1511 and a stop button for stopping the playback of the first captured image 1511.

The user may control the playback of the first captured image 1511 though the end button and the stop button.

On the other hand, as shown in FIG. 15B, if an input of flicking the first captured image 1511 upward or downward is received, the mobile terminal 100 may stop photographing a photographing region corresponding to the first grid region 1510. That is, the mobile terminal 100 may delete the photographing region corresponding to the first grid region 1510.

Therefore, the mobile terminal 100 may display the second captured image 1531 on a whole screen of the display unit 151.

In addition, the mobile terminal 100 may display that the first grid region 1510 of the plurality of grid regions is deleted from a photographing region. That is, the first grid region 1510 may not be identified and only the second grid region 1530 may be identified in the omnidirectional image 1500 divided into the plurality of grid regions.

Now, only the second grid region 1530 remains in the photographing region of the omnidirectional capturing device 200.

As described above, if a plurality of regions are set as a photographing region, the user may control an image corresponding to the set photographing region or delete the photographing region only through a simple motion.

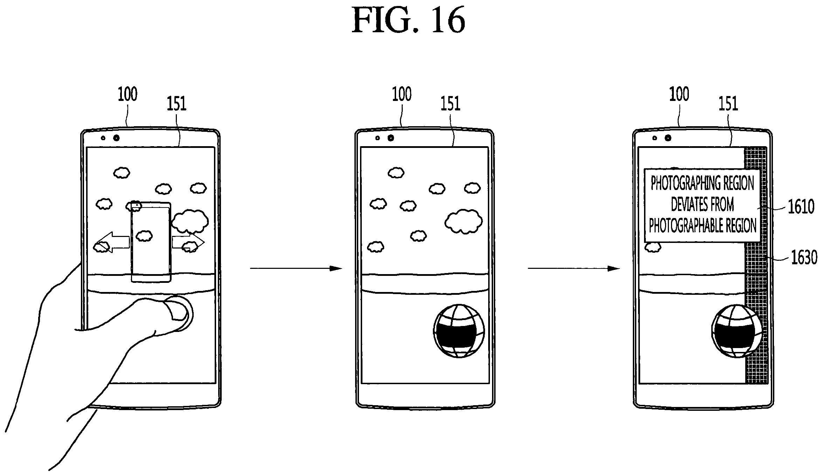

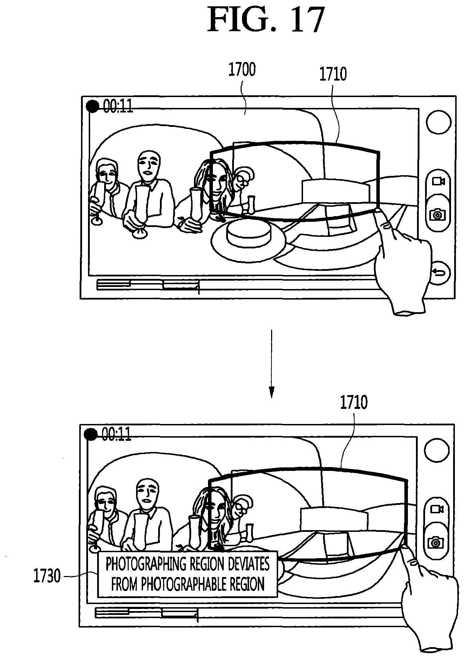

FIGS. 16 and 17 are diagrams an example of notifying that a photographing region deviates from a photographable range in a process of setting the photographing region, according to an embodiment of the present disclosure.

First, referring to FIG. 16, the mobile terminal 100 sets a photographing according to the embodiment of FIGS. 5A and 5B. That is, the mobile terminal 100 sets a photographing region of the omnidirectional capturing device 200 based on a preview image according to a movement of the mobile terminal 100.

If the photographing region deviates from the photographable range, the mobile terminal 100 may display a pop-up window 1610 indicating that the photographing region deviates from the photographable range.

In addition, the mobile terminal 100 may further display a guide image 1630 for indicating that the photographing region deviates from the photographable range.

Furthermore, the mobile terminal 100 may output a vibration indicating that the photographing region deviates from the photographable range.

FIG. 17 is a diagram illustrating an example of notifying that a photographing region deviates from a photographable range if a distortion is generated while an image corresponding to the photographing region is viewed in a 2D image.

Referring to FIG. 17, the mobile terminal 100 displays a 2D omnidirectional image 1700. The user may enlarge a photographing region 1710 though a drag input. This is the same as described with reference to FIG. 14A.

If the enlarged photographing region 1710 deviates from the photographable range, the mobile terminal 100 may display a pop-up window 1730 indicating that the enlarged photographing region deviates from the photographable range.

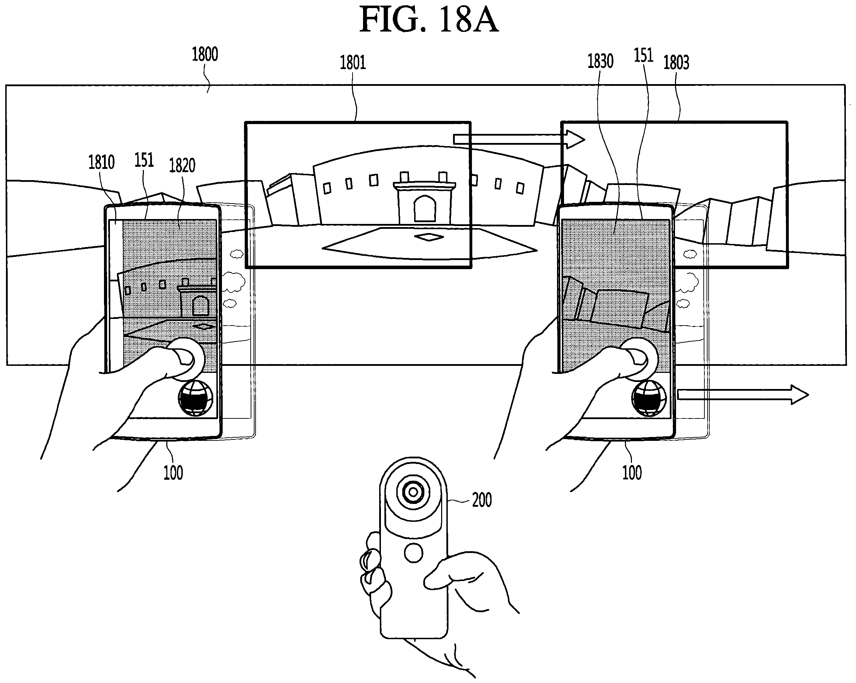

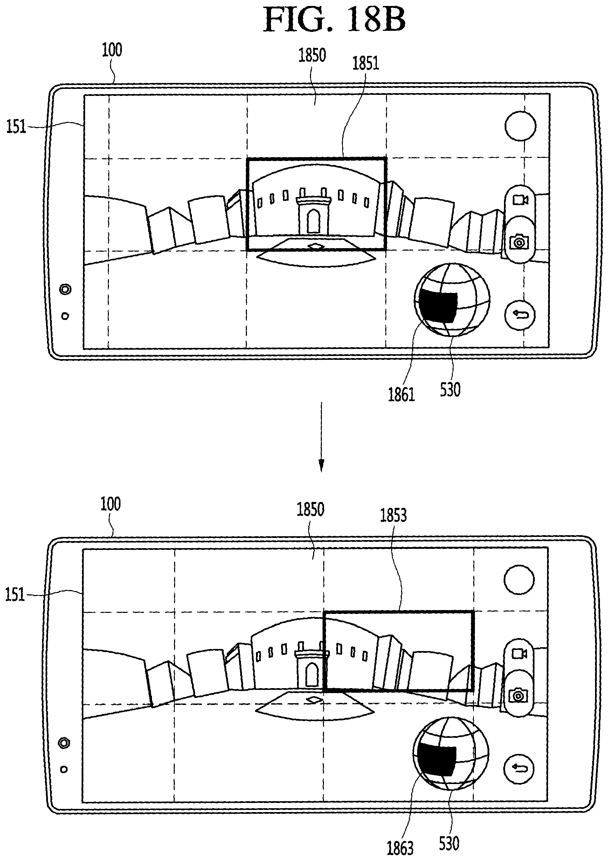

FIGS. 18A and 18B are diagrams illustrating a process of changing a photographing region of the omnidirectional capturing device 200, according to another embodiment of the present disclosure.

Referring to FIG. 18A, a first region 1801 of an omnidirectional background 1800 is set as a photographing region of the omnidirectional capturing device 200. The mobile terminal 100 may display a first photographing region guide image 1820 corresponding to the first region 1801 set as the photographing region.

In a state in which the first photographing region guide image 1820 is selected, if a photographing region change request is received, the mobile terminal 100 may change the photographing region of the omnidirectional capturing device 200 from the first region 1801 to a second region 1803.

The mobile terminal 100 may display a second photographing region guide image 1830 corresponding to the second region 1803.

The mobile terminal 100 may display through an omnidirectional image 1850 that the photographing region is changed.

Referring to FIG. 18B, the omnidirectional image 1850 corresponding to the omnidirectional background 1800 is illustrated. The omnidirectional image 1850 may be divided into a plurality of grid regions.

A first grid region 1851 may be a region corresponding to a photographing region before a change and a second grid region 1853 may be a region corresponding to a photographing region after the change.

In addition, the mobile terminal 100 may display through a guide spherical-view 530 that the photographing region is changed. That is, a first guide photographing region 1861 on the guide spherical-view 530 may be changed into a second guide photographing region 1863.

The first guide photographing region 1861 may be a region corresponding to the first region 1801 that is the photographing region before the change. The second guide photographing region 1863 may be a region corresponding to the second region 1803 that is the photographing region after the change.

The user may intuitively change the photographing region of the omnidirectional capturing device 200.

The present disclosure mentioned in the foregoing description may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments are merely exemplary and are not to be considered as limiting the present disclosure. This description is intended to be illustrative, and not to limit the scope of the claims. All changes and modifications that fall within the scope of the claims are intended to be embraced by the appended claims.

## Claims

1. A mobile terminal (100) comprising:
a camera (121);
a display unit (151) configured to display a preview image (510; 810; 910; 1010; 1101; 1201) acquired through the camera (121);
a short-range communication module (114) configured to receive an omnidirectional image (550; 803; 1205; 1310; 1330; 1400; 1500; 1700; 1850) from an omnidirectional capturing device (200) photographing an omnidirectional background (500; 600; 801; 1100; 1200; 1800); and
a controller (180) configured to control the display unit (151) and the short-range communication module (114),
**characterized in that** the controller (180) is further configured to:
receive a request for setting a photographing region of the omnidirectional image based on the preview image (510; 810; 910; 1010; 1101; 1201) captured by the camera (121),
acquire position information of the preview image (510; 810; 910; 1010; 1101; 1201) from the received omnidirectional image (550; 803; 1205; 1310; 1330; 1400; 1500; 1700; 1850) according to the request by determining coordinate values of an image matching through image recognition the preview image in the omnidirectional image based on values measured through an acceleration sensor, a gyro sensor and a geomagnetic sensor of the omnidirectional capturing device (200), and
control the display unit (151) to display an image according to the set photographing region of the omnidirectional image fixed by the omnidirectional capturing device (200) using the position information independently of a movement of the omnidirectional capturing device (200).

2. The mobile terminal (100) of claim 1, wherein the controller (180) receives an omnidirectional image (550; 803; 1205; 1310; 1330; 1400; 1500; 1700; 1850) corresponding to the omnidirectional background (500; 600; 801; 1100; 1200; 1800) from the omnidirectional capturing device (200) and sets the photographing region based on position information of an image corresponding to the preview image (510; 810; 910; 1010; 1101; 1201) in the received omnidirectional image (550; 803; 1205; 1310; 1330; 1400; 1500; 1700; 1850).

3. The mobile terminal (100) of claim 2, wherein, if a touch input is received on a screen of the display unit (151) displaying the preview image (510; 810; 910; 1010; 1101; 1201) for a certain time, the mobile terminal (100) is moved in one direction by a certain distance, and the touch input is not received, the controller (180) sets the photographing region of the omnidirectional capturing device (200).

4. The mobile terminal (100) of claim 3, wherein, after the photographing region is set, if a touch input is received on the screen of the display unit (151) for a certain time, the mobile terminal (100) is moved in a direction opposite to the one direction by the certain distance, and the touch input is not received, the controller (180) additionally sets another photographing region symmetrical to the photographing region.

5. The mobile terminal (100) of claim 3, wherein, if a placement mode of the mobile terminal (100) is changed from a portrait mode to a landscape mode while the photographing region is set, the controller (180) does not set a region corresponding to a preview image (1201) displayed in the landscape mode as a photographing region.

6. The mobile terminal (100) according to any one of claims 1 to 5, wherein a photographing region is settable to include a plurality of photographing regions, and
the controller (180) receives videos respectively corresponding to the plurality of set photographing regions from the omnidirectional capturing device (200) and displays the received videos on one screen.

7. The mobile terminal (100) of claim 3, wherein a photographing speed of the photographing region by the omnidirectional capturing device (200) is changed based on a movement speed of the mobile terminal (100).

8. The mobile terminal (100) according to any one of claims 1 to 7, further comprising a memory (170),
wherein the controller (180) stores only an image corresponding to the set photographing region among omnidirectional images received from the omnidirectional capturing device (200) in the memory (170).

9. The mobile terminal (100) according to any one of claims 1 to 8, wherein the controller (180) receives an omnidirectional image (550; 803; 1310; 1330; 1400; 1500; 1850) from the omnidirectional capturing device (200), divides the received omnidirectional image into a plurality of grid regions, and displays a grid region (551; 851, 853; 871, 873; 1311; 1331; 1430; 1510, 1530; 1851, 1853) corresponding to the set photographing region among the plurality of grid regions so as to be differentiated from other grid regions.

10. The mobile terminal (100) of claim 9, wherein the controller (180) displays a guide spherical-view (530) obtained by reducing the omnidirectional image and displays a guide photographing region (531) corresponding to the photographing region on the guide spherical-view (530; 872, 874; 1001; 1095; 1861, 1863).

## Patentansprüche

1. Mobiles Endgerät (100), mit:
einer Kamera (121),
einer Anzeigeeinheit (151), die dazu eingerichtet ist, ein mittels der Kamera (121) erhaltenes Vorschaubild (510; 810; 910; 1010; 1101; 1201) anzuzeigen,
einem Nahbereichskommunikationsmodul (114), das dazu eingerichtet ist, ein Omnidirektionalbild (550; 803; 1205; 1310; 1330; 1400; 1500; 1700; 1850) von einer Omnidirektionalaufnahmeeinrichtung (200), die einen omnidirektionalen Hintergrund (500; 600; 801; 1100; 1200; 1800) fotografiert, zu empfangen, und
einer Steuereinheit (180), die dazu eingerichtet ist, die Anzeigeeinheit (151) und das Nahbereichskommunikationsmodul (114) zu steuern,
**dadurch gekennzeichnet, dass** die Steuereinheit (180) ferner eingerichtet ist zum:
Empfangen einer Anforderung zum Einstellen eines Fotografierbereichs des Omnidirektionalbilds basierend auf dem durch die Kamera (121) aufgenommenen Vorschaubild (510; 810; 910; 1010; 1101; 1201),
Erlangen von der Anforderung entsprechender Positionsinformation des Vorschaubilds (510; 810; 910; 1010; 1101; 1201) aus dem empfangenen Omnidirektionalbild (550; 803; 1205; 1310; 1330; 1400; 1500; 1700; 1850) durch Ermitteln von Koordinatenwerten eines Bilds, welches aufgrund von Bilderkennung mit dem Vorschaubild in dem Omnidirektionalbild übereinstimmt basierend auf Werten, die mittels eines Beschleunigungssensors, eines Kreiselsensors und eines Erdmagnetfeldsensors der Omnidirektionalaufnahmeeinrichtung (200) gemessen werden, und
Steuern der Anzeigeeinheit (151) zum Anzeigen eines dem eingestellten Fotografierbereich des Omnidirektionalbilds entsprechenden Bilds, das durch die omnidirektionale Aufnahmeeinrichtung (200) unter Verwendung der Positionsinformation fixiert ist unabhängig von einer Bewegung der Omnidirektionalaufnahmeeinrichtung (200).

2. Mobiles Endgerät (100) nach Anspruch 1, bei dem die Steuereinheit (180) ein dem omnidirektionalen Hintergrund (500; 600; 801; 1100; 1200; 1800) entsprechendes Omnidirektionalbild (550; 803; 1205; 1310; 1330; 1400; 1500; 1700; 1850) von der Omnidirektionalaufnahmeeinrichtung (200) empfängt und den Fotografierbereich einstellt basierend auf Positionsinformation eines Bilds, das mit dem Vorschaubild (510; 810; 910; 1010; 1101; 1201) in dem empfangenen Omnidirektionalbild (550; 803; 1205; 1310; 1330; 1400; 1500; 1700; 1850) korrespondiert.

3. Mobiles Endgerät (100) nach Anspruch 2, bei dem dann, wenn eine Berührungseingabe auf einen das Vorschaubild (510; 810; 910; 1010; 1101; 1201) anzeigenden Bildschirm der Anzeigeeinheit (151) für eine bestimmte Zeitdauer empfangen wird, das mobile Endgerät (100) eine bestimmte Distanz in eine Richtung bewegt wird, und wenn die Berührungseingabe nicht empfangen wird, die Steuereinheit (180) den Fotografierbereich der Omnidirektionalaufnahmeeinrichtung (200) einstellt.

4. Mobiles Endgerät (100) nach Anspruch 3, bei dem dann, nachdem der Fotografierbereich eingestellt worden ist, wenn eine Berührungseingabe auf den Bildschirm der Anzeigeeinheit (151) für eine bestimmte Zeitdauer empfangen wird, das mobile Endgerät (100) die bestimmte Distanz in eine Richtung entgegengesetzt der einen Richtung bewegt wird, und wenn die Berührungseingabe nicht empfangen wird, die Steuereinheit (180) zusätzlich einen weiteren Fotografierbereich symmetrisch zu dem Fotografierbereich einstellt.

5. Mobiles Endgerät (100) nach Anspruch 3, wobei dann, wenn ein Anordnungsmodus des mobilen Endgeräts (100) von einem Hochformatmodus in einen Querformatmodus geändert wird, während der Fotografierbereich eingestellt wird, die Steuereinheit (180) keinen Bereich als einen Fotografierbereich einstellt, der einem in dem Querformatmodus angezeigten Vorschaubild (1201) entspricht.

6. Mobiles Endgerät (100) nach einem der Ansprüche 1 bis 5, bei dem ein Fotografierbereich dazu einstellbar ist, mehrere Fotografierbereiche zu enthalten, und
die Steuereinheit (180) von der Omnidirektionalaufnahmeeinrichtung (200) Videos empfängt, die den mehreren eingestellten Fotografierbereichen entsprechen, und die empfangenen Videos auf einem Bildschirm anzeigt.

7. Mobiles Endgerät (100) nach Anspruch 3, bei dem eine Fotografiergeschwindigkeit des Fotografierbereichs durch die omnidirektionale Aufnahmeeinrichtung (200) basierend auf einer Bewegungsgeschwindigkeit des mobilen Endgeräts (100) geändert wird.

8. Mobiles Endgerät (100) nach einem der Ansprüche 1 bis 7, ferner umfassend einen Speicher (170),
wobei die Steuereinheit (180) aus Omnidirektionalbildern, welche von der Omnidirektionalaufnahmeeinrichtung (200) empfangen werden, nur ein dem eingestellten Fotografierbereich entsprechendes Bild in dem Speicher (170) speichert.

9. Mobiles Endgerät (100) nach einem der Ansprüche 1 bis 8, bei dem die Steuereinheit (180) ein Omnidirektionalbild (550; 803; 1205; 1310; 1330; 1400; 1500; 1700; 1850) von der Omnidirektionalaufnahmeeinrichtung (200) empfängt, das empfangene Omnidirektionalbild in mehrere Gitterabschnitte unterteilt und einen dem eingestellten Fotografierbereich entsprechenden Gitterabschnitt (551; 851, 853; 871, 873; 1311; 1331; 1430; 1510, 1530; 1851, 1853) aus den mehreren Gitterabschnitten so anzeigt, dass er von anderen Gitterabschnitten unterscheidbar ist.

10. Mobiles Endgerät (100) nach Anspruch 9, bei dem die Steuereinheit (180) eine Orientierungskugelansicht (530) anzeigt, die durch Reduzieren des Omnidirektionalbilds erhalten wurde, und einen dem Fotografierbereich entsprechenden Orientierungsfotografierbereich (531) auf der Orientierungskugelansicht (530; 872, 874; 1001; 1095; 1861, 1863) anzeigt.

## Revendications

1. Terminal mobile (100) comprenant :
une caméra (121) ;
une unité d'affichage (151) conçue pour afficher une image de prévisualisation (510, 810, 910, 1010, 1101, 1201) acquise par la caméra (121) ;
un module de communication à courte distance (114) conçu pour recevoir une image omnidirectionnelle (550, 803, 1205, 1310, 1330, 1400, 1500, 1700, 1850) en provenance d'un dispositif de capture omnidirectionnelle (200) photographiant un arrière-plan omnidirectionnel (500, 600, 801, 1100, 1200, 1800) ; et
un organe de commande (180) conçu pour commander l'unité d'affichage (151) et le module de communication à courte distance (114),
**caractérisé en ce que** l'organe de commande (180) est en outre conçu pour :
recevoir une demande de définition d'une région de prise de vues de l'image omnidirectionnelle sur la base de l'image de prévisualisation (510, 810, 910, 1010, 1101, 1201) capturée par la caméra (121),
acquérir des informations de position de l'image de prévisualisation (510, 810, 910, 1010, 1101, 1201) à partir de l'image omnidirectionnelle reçue (550, 803, 1205, 1310, 1330, 1400, 1500, 1700, 1850) conformément à la demande par détermination de valeurs de coordonnées d'une image correspondant par reconnaissance d'image à l'image de prévisualisation dans l'image omnidirectionnelle en fonction des valeurs mesurées par un capteur d'accélération, un capteur gyroscopique et un capteur géomagnétique du dispositif de capture omnidirectionnelle (200),
et
amener l'unité d'affichage (151) à afficher une image conformément à la région de prise de vues définie de l'image omnidirectionnelle fixée par le dispositif de capture omnidirectionnelle (200) à l'aide des informations de position indépendamment d'un mouvement du dispositif de capture omnidirectionnelle (200).

2. Terminal mobile (100) selon la revendication 1, l'organe de commande (180) recevant une image omnidirectionnelle (550, 803, 1205, 1310, 1330, 1400, 1500, 1700, 1850) correspondant à l'arrière-plan omnidirectionnel (500, 600, 801, 1100, 1200, 1800) en provenance du dispositif de capture omnidirectionnelle (200) et définissant la région de prise de vues sur la base des informations de position d'une image correspondant à l'image de prévisualisation (510, 810, 910, 1010, 1101, 1201) dans l'image omnidirectionnelle reçue (550, 803, 1205, 1310, 1330, 1400, 1500, 1700, 1850).

3. Terminal mobile (100) selon la revendication 2, si une entrée tactile est reçue sur un écran de l'unité d'affichage (151) affichant l'image de prévisualisation (510, 810, 910, 1010, 1101, 1201) pendant un certain temps, le terminal mobile (100) étant déplacé dans une direction à une certaine distance, et si l'entrée tactile n'est pas reçue, l'organe de commande (180) définissant la région de prise de vues du dispositif de capture omnidirectionnelle (200).

4. Terminal mobile (100) selon la revendication 3, une fois que la région de prise de vues est définie, si une entrée tactile est reçue sur l'écran de l'unité d'affichage (151) pendant un certain temps, le terminal mobile (100) étant déplacé dans un sens opposé à la direction à une certaine distance, et si l'entrée tactile n'est pas reçue, l'organe de commande (180) fixant en outre une autre région de prise de vues symétrique à la région de prise de vues.

5. Terminal mobile (100) selon la revendication 3, si un mode de placement du terminal mobile (100) passe d'un mode portrait à un mode paysage tandis que la région de prise de vues est définie, l'organe de commande (180) ne définissant pas une région correspondant à une image de prévisualisation (1201) affichée en mode paysage en tant que région de prise de vues.

6. Terminal mobile (100) selon l'une quelconque des revendications 1 à 5, une région de prise de vues pouvant être définie pour comprendre une pluralité de régions de prise de vues, et
l'organe de commande (180) recevant des vidéos correspondant respectivement à la pluralité de régions de prise de vues définies par le dispositif de capture omnidirectionnelle (200) et affichant les vidéos reçues sur un écran.

7. Terminal mobile (100) selon la revendication 3, une vitesse de prise de vues de la région de prise de vues par le dispositif de capture omnidirectionnelle (200) étant modifiée sur la base d'une vitesse de déplacement du terminal mobile (100).

8. Terminal mobile (100) selon l'une quelconque des revendications 1 à 7, comprenant en outre une mémoire (170),
l'organe de commande (180) mémorisant uniquement une image correspondant à la région de prise de vues définie parmi les images omnidirectionnelles reçues en provenance du dispositif de capture omnidirectionnelle (200) dans la mémoire (170).

9. Terminal mobile (100) selon l'une quelconque des revendications 1 à 8, l'organe de commande (180) recevant une image omnidirectionnelle (550, 803, 1205, 1310, 1330, 1400, 1500, 1700, 1850) en provenance du dispositif de capture omnidirectionnelle (200), divisant l'image omnidirectionnelle en une pluralité de régions quadrillées, et affichant une région quadrillée (551, 851, 853, 871, 873, 1311, 1331, 143à, 1510, 1530, 1851, 1853) correspondant à la région de prise de vues définie parmi la pluralité de régions quadrillées de manière à être différenciée des autres régions quadrillées.

10. Terminal mobile (100) selon la revendication 9, l'organe de commande (180) affichant une vue sphérique de guidage (530) obtenue par réduction de l'image omnidirectionnelle et affichant une région de prise de vues de guidage (531) correspondant à la région de prise de vues sur la vue sphérique de guidage (530, 872, 874, 1001, 1095, 1861, 1863).
